# EUROPEAN PATENT APPLICATION

(11) **EP 3 889 294 A2**
(43) Date of publication of application: **06.10.2021**
(21) Application number: 19889197.0
(22) Date of filing: 29.11.2019
(51) Int. Cl.: C22C 38/04, C22C 38/02, C22C 38/06, C22C 38/14, C22C 38/12, C22C 38/00, C21D 8/02

(54) **STRUCTURAL STEEL HAVING EXCELLENT LOW-YIELD RATIO AND LOW-TEMPERATURE TOUGHNESS PROPERTIES AND METHOD FOR MANUFACTURING SAME**

(30) Priority: 30.11.2018 KR 20180152005
(71) Applicant: POSCO, Pohang-si, Gyeongsangbuk-do 37859 (KR)
(72) Inventor: KIM, Woo-Gyeom, Pohang-si, Gyeongsangbuk-do 37877 (KR); BANG, Ki-Hyun, Pohang-si, Gyeongsangbuk-do 37877 (KR)
(74) Representative: Zech, Stefan Markus
(86) International application number: PCT/KR2019/016723
(87) International publication number: WO 2020/111867

(57) **Abstract**

The present invention provides a structural steel that comprises, by weight%, 0.05-0.12% of C, 0.05-0.4% of Si, 1.0-2.0% of Mn, 0.01% or less of P, 0.003% or less of S, 0.015-0.04% of Sol.Al, 0.005-0.02% of Ti, 0.01% or less of Nb, 0.002-0.008% of N, and the remainder of Fe and unavoidable impurities, in which a microstructure contains, by area fraction, 90% or greater of polygonal ferrite and 10% or less of segmented pearlite as a second phase, and 2% or less of MA, wherein the polygonal ferrite includes 20-50% of polygonal ferrite having a grain size of 20 *µ*m or greater and 40-70% of polygonal ferrite having a grain size less than 20 *µ*m.

## Description

### [Technical Field]

The present disclosure relates to structural steel capable of being advantageously used as a structural material such as in an offshore structure, or the like, due to excellent low-temperature toughness, a low-yield ratio, and excellent stability, and a method of manufacturing the same.

### [Background Art]

Recently, as an offshore structure has become large and multifunctional (e.g., drilling, refining, storage, housing, etc.), requirements for securing stability of the structure are increasing. Accordingly, a steel material for the offshore structure having a low yield ratio (yield strength/tensile strength, YS/TS) with a large difference between yield strength and tensile strength are required.

As a yield ratio is lowered, a point in time for plasticity change may be postponed until destruction occurs, and energy may be absorbed during this process to prevent damage and destruction due to external force and impact. In addition, even if there is a certain amount of deformation, damage to the structure may be repaired, before being collapsed, to prevent damage to property and people.

As prior art, in order to secure a low-yield ratio, Patent Document 1 has proposed a steel material in which a second phase is formed inside a grain or at a grain boundary by performing accelerated cooling and performing then a normalizing heat treatment. Specifically, by a component system capable of sufficiently increasing hardenability, an accelerated cooling process capable of making an initial structure into a bainite, and a normalizing heat treatment process, a ferrite having a diameter of about 20 µm or less and a martensite-austenite (MA) phase having a size of about 3 µm or less may be uniformly distributed throughout a parent material. In particular, since the initial structure may be made to have the bainite with carbides inside, the MA may be uniformly distributed in the grain boundary and the grain after the heat treatment. A low-yield ratio, low-temperature toughness, and high elongation may be secured due to the uniformly distributed and fine MA. However, according to Patent Document 1, a low-yield ratio can be implemented, but there were disadvantages such as an increase in component cost to increase hardenability, an increase in cost due to the addition of the heat treatment process, or the like.

Therefore, development of a steel sheet and a manufacturing method for realizing a low-yield ratio by a TMCP process is required. In the present disclosure, problems such as increases in component and manufacturing costs may be solved by optimization of components and refinement of the structure due to introduction of a new cooling pattern.

### [Prior technical literature]

(Patent Document 1) Korean Patent No. 1,799,202

### [Disclosure]

### [Technical Problem]

An aspect of the present disclosure is to provide a structural steel sheet having excellent characteristics with respect to yield strength, low-temperature impact toughness, and a low-yield ratio in a thick steel sheet having a thickness of 50 mm or less, and a method of manufacturing the same.

Objects of the present disclosure are not limited to the above-described contents. The objects of the present disclosure will be entirely understood from the contents of the present specification, and those of ordinary skill in the art to which the present disclosure pertains will not have any difficulty in understanding additional objects of the present disclosure.

### [Technical Solution]

According to an aspect of the present disclosure, a structural steel includes, by weight, 0.05-0.12% of C, 0.05-0.4% of Si, 1.0-2.0% of Mn, 0.01% or less of P, 0.003% or less of S, 0.015-0.04% of Sol.Al, 0.005-0.02% of Ti, 0.01% or less of Nb, 0.002-0.008% of N, a balance of Fe, and unavoidable impurities, wherein a microstructure contains, by area, 90% or more of polygonal ferrite, 10% or less of degenerated pearlite as a second phase, and 2% or less of MA, wherein the polygonal ferrite includes 20-50% of polygonal ferrite having a grain size of 20 µm or more, and 40-70% of polygonal ferrite having a grain size of less than 20 µm.

The structural steel may have a yield strength (YS) of 350 MPa or more, a tensile strength (TS) of 450 MPa or more, and a yield ratio (YS/TS) of 85% or less.

The structural steel may have an elongation of 20% or more, impact toughness at -40°C of 60J or more, and low-temperature impact toughness at -60°C of 100J or more.

The structural steel may be a thick steel plate having a thickness of 50 mm or less.

According to an aspect of the present disclosure, a method for manufacturing a structural steel includes reheating a slab comprising, by weight, 0.05-0.12% of C, 0.05-0.4% of Si, 1.0-2.0% of Mn, 0.01% or less of P, 0.003% or less of S, 0.015-0.04% of Sol.Al, 0.005-0.02% of Ti, 0.01% or less of Nb, 0.002-0.008% of N, a balance of Fe, and unavoidable impurities, to a temperature range of 1050 to 1150°C; hot-rolling the reheated slab at a finish rolling temperature of 830 to 970°C; first cooling the rolled steel sheet at a cooling rate of 10 to 30°C/sec to a first cooling end temperature of Ar3 point or less; maintaining the first cooled steel sheet for 5 to 12 seconds, after completion of the first cooling; and second cooling the first cooled steel sheet at a cooling rate of 15 to 60°C/sec to a second cooling end temperature of 300 to 500°C, after completion of the maintaining.

In the method, the first cooling end temperature may be a temperature of 630 to 700°C.

### [Advantageous Effects]

According to an aspect of the present disclosure, structural steel suitable as a structural material exhibiting excellent characteristics such as a low-yield ratio of 0.85 or less, a yield strength of 350 MPa or more, and impact toughness at -40°C of 60 J or more in a thick steel sheet having a thickness of 50 mm or less may be obtained.

Accordingly, since it is possible to secure stability of a structure and contribute to increasing lifespan, there may be effects capable of being advantageously used as structural steel for shipbuilding, offshore, architecture, or the like.

### [Description of Drawings]

FIG. 1 is a photograph of a microstructure of Inventive Example 1.
FIG. 2 is a photograph of a microstructure of Comparative Example 7, manufactured by a conventional control rolling process.

### [Best Mode for Invention]

Hereinafter, preferred embodiments of the present disclosure will be described. However, embodiments of the present disclosure may be modified in various other forms, and the scope of the present disclosure is not limited to embodiments described below. In addition, embodiments of the present disclosure may be provided in order to more completely explain the present disclosure to those with average knowledge in the art.

In the prior art, the present inventors used martensite-austenite (MA), a very hard phase, to employ a difference in hardness between a base material and the MA, in order to secure a low-yield ratio. When using the MA, a disadvantageous aspect that may cause a decrease in impact toughness was recognized, and, they the present inventors researched the same to solve this issue. As a result, it was confirmed that a microstructure therein was composed of polygonal ferrite, MA, and degenerated pearlite, and when an area ratio thereof was properly controlled, a low-yield ratio could be secured without deteriorating impact toughness. Based on the above, the present disclosure was completed.

Hereinafter, structural steel according to an aspect of the present disclosure will be described in detail. In the present disclosure, when expressing an amount of each element, it is necessary to note that the amount refers to wt%, unless otherwise specified. In addition, a ratio of crystals or structures is expressed, by area, unless otherwise indicated.

### [Structural Steel]

First, a component system of structural steel according to an aspect of the present disclosure will be described. Structural steel according to an aspect of the present disclosure may include, by weight, 0.05-0.12% of C, 0.05-0.4% of Si, 1.0-2.0% of Mn, 0.01% or less of P, 0.003% or less of S, 0.015-0.04% of Sol.Al, 0.005-0.02% of Ti, 0.01% or less of Nb, 0.002-0.008% of N, a balance of Fe, and unavoidable impurities.

### C: 0.05-0.12%

In the present disclosure, C may be an element that causes solid solution strengthening and exists as a carbonitride by Nb or the like, to secure tensile strength. When C is added in excess of 0.12%, not only formation of MA may be promoted, but also pearlite may be produced, to deteriorate impact and fatigue properties at low temperatures. When an amount of C is less than 0.05%, it may be may be disadvantageous in formation of a second phase and a yield ratio may increase. Therefore, an amount of C is limited to 0.05 to 0.12%.

### Si: 0.05-0.4%

Si may play a role of deoxidizing molten steel by assisting Al, and may be an element necessary to secure yield strength and tensile strength. In order to secure impact and fatigue properties at low temperatures, an amount thereof may be limited to 0.4% or less. In addition, when Si is added in an amount exceeding 0.4%, diffusion of C may be prevented and formation of MA may be promoted. In order to remove Si to less than 0.05%, since processing time period in a steelmaking process should greatly increase, productivity may be lowered. Therefore, an amount thereof may be limited to 0.05% or more. Therefore, an amount of Si in the present disclosure may be limited to 0.05-0.4%.

### Mn: 1.0-2.0%

Mn may be added in an amount of 1.0% or more because an effect of increasing strength by solid solution strengthening is large. When an amount thereof is added in an amount exceeding 2.0%, it may cause a decrease in toughness due to formation of MnS inclusions and segregation in a central portion. Therefore, an upper limit thereof may be limited to 2.0%.

### P: 0.01% or less

P may cause grain boundary segregation as an impurity and may cause embrittlement of steel. Therefore, an upper limit of P may be limited to 0.01%.

### S: 0.003% or less

As an impurity, S may be mainly combined with Mn to form MnS inclusions, which may be a factor that inhibits low-temperature toughness. Therefore, in order to secure low-temperature toughness and low-temperature fatigue properties, it is necessary to limit S to a range of 0.003% or less.

### Al: 0.015-0.04%

In the present disclosure, Al may be a major deoxidizing agent for steel, and is necessary to be added at least 0.015% in a dissolved state. In addition, since it may be an element necessary to fix an N component during strain aging, at least 0.015% or more should be added. When an amount thereof is added in excess of 0.04%, it may lower low-temperature toughness due to an increase in fraction and size of Al₂O₃ inclusions. Also, similarly to Si, it may promote formation of a MA phase of a base metal and a welding heat-affected zone, to reduce low-temperature toughness and low-temperature fatigue properties. Therefore, an amount of Al in the present disclosure may be limited to 0.015-0.04%.

### Ti: 0.005-0.02%

Since Ti may combine with N to form Ti nitride (TiN), to reduce an amount of the solid solution N, 0.005% or more should be added. These precipitates may play a role in suppressing coarsening of the structure, contributing to refinement, and improving toughness. When an amount of Ti exceeds 0.02%, it may cause destruction due to coarsening of the precipitate, and solid solution Ti, not combined with N, may remain to form Ti carbide (TiC), which may lower toughness of a base material and a welded portion. Therefore, in the present disclosure, an amount of Ti may be limited to 0.005 to 0.02%.

### Nb: 0.01% or less (including 0%)

Nb may be an element that suppresses recrystallization during rolling or cooling by depositing a solid solution or carbonitride to refine a structure and increase strength. When a grain is too fine, it may be difficult to secure a low-yield ratio due to an increase in yield strength. Therefore, a range to be added may be limited to 0.01%. Since it may be advantageous not to add Nb in order to more secure a low-yield ratio, a lower limit thereof may not be set separately.

### N: 0.002-0.008%

N may be an element that helps to improve strength and toughness by forming precipitates together with Ti, Nb, Al, or the like, to make an austenite structure fine upon reheating. When N is excessively included, since surface cracking may be caused at high temperature to form a precipitate, remaining portions of N exist in an atomic state to reduce toughness. Therefore, an amount of N may be limited to 0.002 to 0.008% in the present disclosure.

In high-strength structural steel of the present disclosure, a component other than the alloying elements mentioned above may be an iron (Fe) . However, since unintended impurities may inevitably be incorporated from a raw material or a surrounding environment in a normal manufacturing process, this may not be excluded. Since these impurities may be known to anyone of ordinary skill in the art, all the details will not be described in detail. However, as a non-limiting example, the impurities may include Mo: less than 0.05%, Cr: less than 0.05%, Cu: less than 0.05%, and Ni: less than 0.05%.

Structural steel according to an aspect of the present disclosure may include a microstructure containing, by area, 90% or more of polygonal ferrite, 10% or less of degenerated pearlite as a second phase, and 2% or less of MA. In addition, the microstructure of the structural steel according to the present disclosure may be mainly composed of the polygonal ferrite, and may be composed of a small amount of MA and degenerated pearlite. It may be important to minimize an amount of the MA and to properly distribute the degenerated pearlite, a less hard phase than the MA, in order to secure a low-yield ratio and low-temperature toughness.

The degenerated pearlite may be an intermediate phase between pearlite and MA, and may be formed by controlling a cooling rate. More specifically, when a cooling rate is fast, MA may be formed, and when a cooling rate is slow, pearlite may be formed. When a cooling rate is intermediate, degenerated pearlite may be formed. In the present disclosure, the degenerated pearlite may be formed by controlling a cooling rate in second cooling. In addition, the degenerated pearlite may have an intermediate hardness characteristic between pearlite and MA.

The present disclosure may be characterized in that a low-yield ratio and low-temperature impact toughness properties may be obtained by an appropriate fraction of the second phase. When a fraction of the second phase is high, it may be difficult to implement a low-yield ratio. When the fraction is high, low-temperature impact toughness may decrease. Therefore, in the present disclosure, the degenerated pearlite may be limited to 10% or less, and the MA may be limited to 2% or less, and more preferably, a fraction of the second phase may be 5 to 11%.

In addition, the polygonal ferrite may include 20-50% of polygonal ferrite having a grain size of 20 µm or more, and 40-70% of polygonal ferrite having a grain size of less than 20 µm. As a grain size of the polygonal ferrite decreases, yield strength may increase to increase a yield ratio. Therefore, in order to balance strength and a yield ratio, it is necessary to properly allocate grain sizes of polygonal ferrite. Therefore, in the present disclosure, polygonal ferrite having a grain size of 20 µm or more may be limited to 20-50%, and polygonal ferrite having a grain size of less than 20 µm may be limited to 40-70%.

Structural steel satisfying the above component system and the microstructure conditions may be configured to satisfy a yield strength of 350 MPa or more, impact toughness at -40°C of 60J or more, and a yield ratio of 85% or less, and, to satisfy a tensile strength of 450 MPa or more, an elongation of 20% or more, and low-temperature impact toughness at -60°C of 100J or more.

Next, a method of manufacturing high-strength structural steel according to another aspect of the present disclosure will be described in detail.

### [Method of Manufacturing Structural Steel]

A method of manufacturing structural steel according to another aspect of the present disclosure may include slab reheating - hot-rolling - cooling (first cooling, maintenance, and second cooling), and detailed conditions for each manufacturing operation may be as follows.

### Reheating Slab

First, a slab including of the above-described component system may be prepared, and the slab may be reheated to a temperature range of 1050 to 1150°C. When the reheating temperature exceeds 1150°C, austenite crystal grains may become coarse, resulting in a problem of poor toughness. When the reheating temperature is less than 1050°C, Ti, Nb, or the like may not be sufficiently dissolved, resulting in a decrease in strength.

### Hot-Rolling

Rolling may be terminated at a relatively high temperature such that the heated slab is advantageous for forming polygonal ferrite. Specifically, hot-rolling may be performed at a finish rolling end temperature of 830 to 970°C to obtain a thick steel sheet.

### Cooling

In the present disclosure, cooling after the hot-rolling may be a very important process in realizing a target structure. The cooling in the present disclosure may include three (3) operations, first cooling - maintenance - second cooling, unlike cooling in ordinary TMCP rolling.

For the first cooling, a ferrite transformation start temperature, Ar3 or less, may be set as a first cooling end temperature, and a cooling rate may be minimized. In the present disclosure, the setting Ar3 or less set as the first cooling end temperature may be to form polygonal ferrite by air cooling. More preferably, the first cooling end temperature may be appropriately 630 to 700°C, and the cooling rate may be 10 to 30°C/sec.

After completion of the first cooling, cooling may not be performed again, and the maintenance in which is maintained as it is may be performed. In the maintenance, diffusion of carbon may be caused to promote formation of a second phase within a grain boundary or a grain. More specifically, the maintenance may be performed for 5 to 12 seconds.

After completion of the maintenance, the second cooling may be finally performed. The second cooling may be performed under conditions of a second cooling end temperature of 300 to 500°C and a maximum cooling rate of about 15 to 60°C/sec. MA and degenerated pearlite may be formed by the second cooling. In addition, an increase in tensile strength may be secured due to a low cooling end temperature.

Structural steel manufactured according to the above-described method may have a microstructure including 20-50% of polygonal ferrite having a grain size of 20 µm or more, and 40-70% of polygonal ferrite having a grain size of less than 20 µm. In addition, the second phase may be composed of degenerated pearlite or MA, and fractions thereof may be 10% or less and 2% or less, respectively.

Hereinafter, the present disclosure will be described in more detail through examples. However, it should be noted that the following examples may be for illustrative purposes only and may not be intended to limit the scope of the present disclosure. This is because the scope of the present disclosure may be determined by matters described in the claims and matters reasonably inferred therefrom.

### [Mode for Invention]

### (Example)

After preparing molten steel having a component composition illustrated in Table 1 below, a slab was manufactured using a continuous casting process. A steel sheet was manufactured by rolling and cooling the slab under manufacturing conditions illustrated in Table 2 below. In Table 3 below, microstructure and mechanical properties of steel sheets manufactured under the manufacturing conditions of Table 2 were measured and illustrated.

**[Table 1]**

| Steel | C | Si | Mn | P | S | Al | Ti | Nb | N | |
|---|---|---|---|---|---|---|---|---|---|---|
| A | 0.078 | 0.203 | 1.55 | 0.0077 | 0.0017 | 0.023 | 0.012 | 0 | 0.0035 | IS |
| B | 0.079 | 0.205 | 1.52 | 0.0084 | 0.0019 | 0.028 | 0.013 | 0.007 | 0.0038 | IS |
| c | 0.082 | 0.214 | 1.57 | 0.0074 | 0.0021 | 0.022 | 0.0098 | 0.005 | 0.0037 | IS |
| D | 0.081 | 0.167 | 1.53 | 0.0063 | 0.0020 | 0.017 | 0.0011 | 0.008 | 0.0035 | IS |
| E | 0.152 | 0.199 | 1.54 | 0.0083 | 0.0017 | 0.024 | 0.0012 | 0.007 | 0.0042 | CS |
| F | 0.069 | 0.225 | 1.58 | 0.0082 | 0.0017 | 0.021 | 0.0010 | 0.021 | 0.009 | CS |

**[Table 2]**

| | Steel | Reheat Temp. (°C) | Finish Roll Temp. (°C) | Cooling Start Temp. (°C) | 1^{st} Cooling End Temp. (°C) | 1^{st} Cooling Rate (°C/s) | Mainten ance Time (s) | 2^{nd} Cooling End Temp. (°C) | 2^{nd} Cooling Rate (°C/s) |
|---|---|---|---|---|---|---|---|---|---|
| IE1 | A | 1108 | 920 | 862 | 684 | 15 | 9 | 368 | 24 |
| IE2 | B | 1112 | 851 | 812 | 656 | 23 | 8 | 402 | 35 |
| IE3 | C | 1116 | 875 | 832 | 669 | 16 | 8 | 412 | 26 |
| IE4 | D | 1113 | 865 | 816 | 677 | 20 | 9 | 343 | 36 |
| CE1 | B | 1122 | 847 | 807 | 760 | 25 | 8 | 354 | 42 |
| CE2 | D | 1121 | 764 | 736 | 682 | 22 | 9 | 365 | 38 |
| CE3 | C | 1107 | 862 | 831 | 384 | 28 | - | - | - |
| CE4 | E | 1107 | 847 | 801 | 692 | 19 | 8 | 384 | 29 |
| CE5 | F | 1114 | 859 | 814 | 675 | 18 | 9 | 366 | 28 |

**[Table 3]**

| | St ee l | Yield Stren gth (MPa) | Tensil e Streng th (MPa) | Elong ation (%) | Yield Ratio (%) | Base Materi al Impact (-40°C ) | Base Materi al Impact (-60°C ) | Polygonal Ferrite Distribution (%) | | Degenera ted Pearlite Distribu tion (%) | MA Dist ribu tion (%) |
|---|---|---|---|---|---|---|---|---|---|---|---|
| | | | | | | | | <20m | ≥20m | | |
| IE1 | A | 385 | 509 | 31 | 76 | 284 | 224 | 52 | 39 | 8.2 | 0.5 |
| IE2 | B | 406 | 521 | 29 | 78 | 262 | 184 | 62 | 28 | 8.9 | 0.8 |
| IE3 | C | 415 | 518 | 30 | 80 | 212 | 202 | 43 | 47 | 9.1 | 0.7 |
| IE4 | D | 394 | 505 | 32 | 78 | 226 | 194 | 64 | 26 | 8.5 | 1.2 |
| CE1 | B | 441 | 507 | 30 | 87 | 265 | 245 | 42 | 50 | 1.6 | 3.8 |
| CE2 | D | 435 | 502 | 29 | 87 | 245 | 198 | 75 | 13 | 0.7 | 4.2 |
| CE3 | C | 434 | 504 | 27 | 86 | 236 | 188 | 26 | 38 | 0.8 | 4.3 |
| CE4 | E | 467 | 514 | 26 | 91 | 157 | 26 | 55 | 35 | 0.6 | 6.3 |
| CE5 | F | 471 | 539 | 28 | 87 | 182 | 45 | 78 | 12 | 0.8 | 5.2 |

| | | | | | | | | | | | |
|---|---|---|---|---|---|---|---|---|---|---|---|
| IE: Inventive Example, CE: Comparative Example IS: Inventive Steel, CS: Comparative Steel | | | | | | | | | | | |

In Table 1, Inventive Steels A to D were steel sheets satisfying the component ranges specified in the present disclosure. Comparative Steels E and F were steel sheets not satisfying the component range specified in the present disclosure. Comparative Steel E was steel having an amount of C exceeding the specified amount of C, and Comparative Steel F was steel having an amount of Nb exceeding the specified amount of Nb. It can be seen that Inventive Examples satisfying the specified alloy composition and the manufacturing conditions may secure a yield strength of 350 MPa and a tensile strength of 450 MPa or more, and a base material had impact toughness at -60°C of 100J or more and a yield ratio of 85% or less.

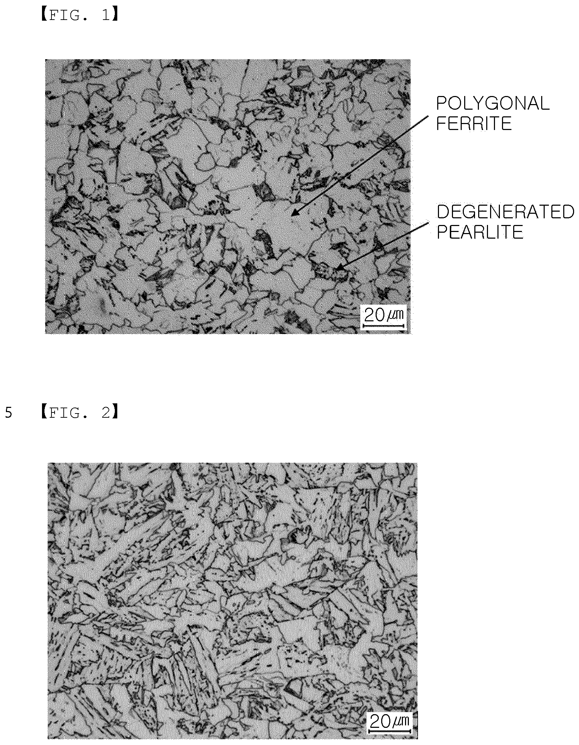

In Inventive Examples 1 to 4, all of the components were satisfied, and microstructures thereof were controlled by first cooling - maintenance - second cooling, to secure a target low-yield ratio and target low-temperature toughness. In particular, in Inventive Example 1 having the microstructure of FIG. 1, Nb was not added therein, and, thus, it can be seen that had a lower yield ratio, which suppressed refinement of a structure and formation of an acicular ferrite structure by the addition of Nb, to form polygonal ferrite.

In Comparative Examples 1 to 3, the components were satisfied but the production conditions of the present disclosure were not satisfied, and it can be seen that all thereof had a yield ratio exceeding 85%. Reasons for the yield ratio exceeding 85% may be as follows. In Comparative Example 1 in which a first cooling temperature was terminated at Ar3 or higher, ferrite transformation was not formed during the first cooling. In Comparative Example 2, since it was rolled at a low temperature, yield strength increased due to refinement of a structure. In Comparative Example 3, a yield ratio increased due to formation of fine acicular ferrite by applying conventional TMCP cooling. In addition, in Comparative Example 3, since a main structure was bainite, a fraction of ferrite was small. FIG. 2 shows a microstructure of a steel sheet manufactured by such conventional TMCP cooling. Unlike the Invention Examples, it can be seen that a yield ratio increased due to formation of bainite and lack of the second phase.

In Comparative Examples 4 and 5, the manufacturing conditions were satisfied, but the C and Nb components were exceeded. It can be seen that, when the C component was exceeded, impact characteristics were inferior at -40 and -60°C, and when the Nb component was exceeded, a yield ratio increased due to refinement of a grain and promotion of a bainite structure.

While example embodiments have been shown and described above, it will be apparent to those skilled in the art that modifications and variations could be made without departing from the scope of the present disclosure as defined by the appended claims.

## Claims

1. A structural steel comprising, by weight, 0.05-0.12% of C, 0.05-0.4% of Si, 1.0-2.0% of Mn, 0.01% or less of P, 0.003% or less of S, 0.015-0.04% of Sol.Al, 0.005-0.02% of Ti, 0.01% or less of Nb, 0.002-0.008% of N, a balance of Fe, and unavoidable impurities,
wherein a microstructure contains, by area, 90% or more of polygonal ferrite, 10% or less of degenerated pearlite as a second phase, and 2% or less of MA,
wherein the polygonal ferrite includes 20-50% of polygonal ferrite having a grain size of 20 µm or more, and 40-70% of polygonal ferrite having a grain size of less than 20 µm.

2. The structural steel of claim 1, having a yield strength (YS) of 350 MPa or more, a tensile strength (TS) of 450 MPa or more, and a yield ratio (YS/TS) of 85% or less.

3. The structural steel of claim 1, having an elongation of 20% or more, impact toughness at -40°C of 60J or more, and low-temperature impact toughness at -60°C of 100J or more.

4. The structural steel of claim 1, wherein the structural steel is a thick steel plate having a thickness of 50 mm or less.

5. A method for manufacturing a structural steel, comprising:
reheating a slab comprising, by weight, 0.05-0.12% of C, 0.05-0.4% of Si, 1.0-2.0% of Mn, 0.01% or less of P, 0.003% or less of S, 0.015-0.04% of Sol.Al, 0.005-0.02% of Ti, 0.01% or less of Nb, 0.002-0.008% of N, a balance of Fe, and unavoidable impurities, to a temperature range of 1050 to 1150°C;
hot-rolling the reheated slab at a finish rolling temperature of 830 to 970°C;
first cooling the rolled steel sheet at a cooling rate of 10 to 30°C/sec to a first cooling end temperature of Ar3 point or less;
maintaining the first cooled steel sheet for 5 to 12 seconds, after completion of the first cooling; and
second cooling the first cooled steel sheet at a cooling rate of 15 to 60°C/sec to a second cooling end temperature of 300 to 500°C, after completion of the maintaining.

6. The method of claim 5, wherein the first cooling end temperature is a temperature of 630 to 700°C.
